# EUROPEAN PATENT APPLICATION

(11) **EP 1 364 822 A1**
(43) Date of publication of application: **26.11.2003**
(21) Application number: 02715746.0
(22) Date of filing: 16.01.2002
(51) Int. Cl.: B60J 7/08, B62D 33/04

(54) **WING OPENING/CLOSING DEVICE FOR TRUCKS OR THE LIKE**

(30) Priority: 23.01.2001 JP 2001015098; 20.11.2001 JP 2001355252
(71) Applicant: Seiko Giken Kabushiki Kaisha, Meguro-ku, Tokyo 152-0003 (JP)
(72) Inventor: HORI, Masaki, Meguro-ku, Tokyo 152-0003 (JP); SUGIMOTO, Katsumi, Meguro-ku, Tokyo 152-0003 (JP)
(74) Representative: Reinhardt, Harry
(86) International application number: JP0200223
(87) International publication number: WO02058952

(57) **Abstract**

A wing door opening/closing apparatus including a link mechanism and a spring for swinging up a wing door 1. This wing door opening/closing apparatus is made up by plural wing door opening/closing devices A and B. The disparity of the moments generated by one wing door opening/closing device A in the plural wing door opening/closing devices A and B is compensated by a moment generated by the other wing door opening/closing device B.

## Description

### [TECHNICAL FIELD]

This invention relates to a wing door opening/closing apparatus and, more particularly, to a wing door opening/closing apparatus for a truck or the like.

### [BACKGROUND ART]

Up to now, a hydraulic cylinder or a motor has been used as a driving apparatus for opening/closing a wing door.

### [OBJECT OF THE INVENTION]

However, if a hydraulic cylinder or a motor is used as a driving apparatus for opening/closing a wing door, in general, is used, piping, wiring or power supply is needed for driving the hydraulic cylinder or motor. This poses a problem that since the mechanism for opening/closing the wing door becomes bulky in size, extremely labor-consuming maintenance operations are needed, and that, should the driving apparatus be in disorder, extremely labor-consuming repair operations are also needed.

It is an object of the present invention to provide an apparatus for opening/closing a wing door, which makes use of a spring and a link mechanism, which is simplified in structure and which scarcely needs any maintenance operations. It is another object of the present invention to provide an apparatus for opening/closing a wing door, which is able to apply a necessary and sufficient moment to the wing door door depending on the angle of rotation of the wing door.

### [DISCLOSURE OF THE INVENTION]

For accomplishing the above objects, the present invention provides an apparatus for opening/closing a wing door which is constituted by combining a plurality of wing door opening/closing devices having respective different moment characteristics representing the relation between the angle of rotation of the wing door and a moment generated by the wing door opening/closing devices.

In another aspect, the present invention provides a wing door opening/closing apparatus for swinging up a wing door pivotally mounted to a cargo box of a vehicle body of a truck or the like in the vicinity of a roof portion of the cargo box so that the wing door overlies the roof portion and lateral sides of the cargo box, wherein the wing door opening/closing apparatus is formed by combining a plurality of wing door opening/closing devices having respective different moment characteristics representing the relationship between a moment caused by the weight of the wing door being rotated and moments generated by the respective wing door opening/closing devices. At least one of the wing door opening/closing devices includes a spring for generating the biasing force for swinging up the wing door and a link mechanism for transmitting the biasing force of the spring to the wing door.

In still another aspect, the present invention provides a wing door opening/closing apparatus for swinging up a wing door pivotally mounted to a cargo box of a vehicle body of a truck or the like in the vicinity of a roof portion of the cargo box so that the wing door overlies the roof portion and lateral sides of the cargo box, wherein the wing door opening/closing apparatus is made up by a plurality of wing door opening/closing devices, the disparity of a moment produced by one of the wing door opening/closing devices with respect to a moment caused by the weight of the wing door being rotated is compensated by a moment generated by the remaining one of the wing door opening/closing devices and wherein at least one of the wing door opening/closing devices includes a spring for generating a biasing force for swinging up the wing door and a link mechanism for transmitting the biasing force of the spring to the wing door.

According to the present invention, such a wing door opening/closing apparatus may be provided which is simplified in structure by making use of a spring and a link mechanism so that maintenance is substantially not necessary. Moreover, such a wing door opening/closing apparatus may be provided in which, by combining plural wing door opening/closing devices having respective different moment characteristics, the sum moment substantially balanced with respect to the weight moment of the wing door at an optional rotational angle of the wing door may be output despite the simplified structure of the respective wing door opening/closing devices.

According to the present invention, such a wing door opening/closing apparatus may be provided which is substantially maintenance-free and has a simplified structure comprised of a spring and a link mechanism and also such a wing door opening/closing apparatus which is able to apply sufficient and necessary moment to the wing door depending on the angle of rotation of the wing door.

In addition, at least one of plural wing door opening/closing devices, making up the wing door opening/closing apparatus, has a link mechanism and a spring, so that the biasing force of the spring may be boosted and transmitted to the wing door to develop a large moment for swinging-up the wing door.

### [BRIEF DESCRIPTION OF THE DRAWINGS]

Fig.1 is a perspective view showing a truck to which the wing door opening/closing apparatus of the present invention is applied.
Fig.2 illustrates the structure of a cargo box frame provided to the truck shown in Fig.1.
Fig.3 is a graph for illustrating moment characteristics of the wing door opening/closing apparatus according to an embodiment of the present invention.
Fig.4 is a plan view of a wing door opening/closing apparatus according to an embodiment of the present invention.
Fig.5 is a front view of a first wing door opening/closing device A contained in the wing door opening/closing apparatus shown in Fig.4.
Fig.6 shows the operation of the first wing door opening/closing device A shown in Fig.5.
Fig.7 is a front view of a second wing door opening/closing device B contained in the wing door opening/closing apparatus shown in Fig.4.
Fig.8 shows the operation of the second wing door opening/closing device B shown in Fig.7.
Fig.9 is a front view of a first wing door opening/closing device A contained in the wing door opening/closing apparatus according to a second embodiment of the present invention.
Fig. 10 shows the operation of the first wing door opening/closing device shown in Fig.9.
Fig.11 is a plan view of a wing door opening/closing apparatus according to a third embodiment of the present invention.
Fig. 12 is a front view of the first wing door opening/closing device A contained in the wing door opening/closing apparatus shown in Fig.11.
Fig.13 shows the operation of the first wing door opening/closing device A shown in Fig. 11.
Fig. 14 is a front view of the first wing door opening/closing device A contained in the wing door opening/closing apparatus shown in Fig.11.
Fig. 15 shows the operation of the first wing door opening/closing device B shown in Fig.14.
Fig.16 is a plan view of the second wing door opening/closing device according to a fourth embodiment of the present invention.
Fig.17 is a front view of the second wing door opening/closing device B contained in the wing door opening/closing apparatus shown in Fig. 16.
Fig.18 shows the operation of the second wing door opening/closing device B shown in Fig.17.
Fig.19 is a front view of the second wing door opening/closing device B contained in the wing door opening/closing apparatus according to a fifth embodiment of the present invention..
Fig.20 shows the operation of the second wing door opening/closing device B shown in Fig.19.
Fig.21 is a plan view of a wing door opening/closing apparatus according to a sixth embodiment of the present invention.
Fig.22 is a front view of a second wing door opening/closing device C contained in the wing door opening/closing apparatus shown in Fig.21.
Fig.23 shows the operation of the second wing door opening/closing device C shown in Fig.22.
Figs.24(A) and 24(B) show details of a second spring member shown in Fig.21, with Figs.24(A), 24(B) being a front view and a plan view, respectively.
Fig.25 is a front view of the second wing door opening/closing device C contained in the wing door opening/closing apparatus according to a seventh embodiment of the present invention.
Fig.26 shows the operation of the second wing door opening/closing device C shown in Fig.22.
Figs.27(A) and 27(B) show details of a second spring member shown in Fig.21, with Figs.24(A), 24(B) being a front view and a plan view, respectively.
Fig.28 is a front view of the second wing door opening/closing device D contained in the wing door opening/closing apparatus according to a seventh embodiment of the present invention.
Figs.29(A) and 29(B) show details of a torsion coil spring shown in Fig.28, with Figs.29(A), 29(B) showing the state of initial compression and interposition and the state of operation termination, respectively.
Fig.30 is a front view of a wing door opening/closing apparatus according to a ninth embodiment of the present invention.
Fig.31 is a side view of the wing door opening/closing apparatus according to the ninth embodiment of the present invention. Fig.32 shows the operation of the wing door opening/closing apparatus shown in Fig.30.

### [Description of Reference Numerals]

- 1: wing
- 1b: first bracket
- 2: cargo box frame
- 3: beam, center beam
- 3a: second bracket
- 4: bracket (mounting bracket for first or second wing opening/closing devce
- 5: hinge (wing hinge)
- 6: pin (pin for wing hinge)
- 8: spring
- 9: link mechanism
- 10: pin
- 11: first link member
- 12: pin
- 13: second link member
- 14: pin
- 15: pin
- 16: third link member
- 17: pin
- 18: spring rod
- 19: third slider
- 20: first guide member
- 21: adjustment nut
- 22: first spring retainer
- 23: second spring retainer
- 24: stopper
- 26: link mechanism
- 27: pin
- 28: first link member
- 29: link mechanism
- 30: pin
- 31: first link member
- 39.: link mechanism
- 40: pin
- 41: first link member
- 42: plate (fixed plate)
- 43: pin (fulcrum point for spring cover 44)
- 44: spring cover
- 45: adjustment nut
- 46: first spring retainer
- 47: second spring retainer
- 48: stopper
- 49: link mechanism
- 50: pin
- 51: first link member
- 52: plate (fixed plate)
- 53: pin (fulcrum point for spring cover 54)
- 54: spring cover
- 55: adjustment nut
- 56: first spring retainer
- 57: second spring retainer
- 58: stopper
- 60: link mechanism
- 61: pin
- 62: slider
- 63: second-1 link member
- 65: pin
- 66: spring rod, second spring rod
- 67: pin
- 68: spring cover
- 69: first spring retainer
- 70: spring, second spring
- 71: link mechanism
- 72: pin
- 73: second-1 link member
- 74: second spring member
- 74a: casing
- 74b: rod
- 74c: second spring
- 75: second-2 link member
- 76: pin
- 78: pin
- 80: link mechanism
- 81: second spring member (tension spring)
- 81a: second spring (tension spring)
- 83: stopper
- 81: second spring member (tension spring)
- 81a: first spring (tension spring)
- 81b: second spring (torsion spring)
- 83: stopper
- 81: spring member
- 81b: first connecting portion
- 81c: second connecting portion
- 83: stopper
- 90: torsion spring
- 91: mounting plate
- 91a: cut-out
- A: first wing opening/closing device
- B: second wing opening/closing device
- C: second wing opening/closing device
- D: second wing opening/closing device

### [MODES EMBODYING THE INVENTION]

Now, preferred modes embodying the present invention will be illustrated.

In the preferred embodiment of the present invention, one of the plural wing door opening/closing devices having respective different moment characteristics is accommodated in a cargo box frame when the wing door is closed, with the other being mounted to outside of the cargo box frame in a side-by-side relation to the first stated device along the fore-and-aft direction of the vehicle body.

For example, a first wing door opening/closing device A is accommodated in the inside of a cargo box frame ("torii") 2, while a second wing door opening/closing device B is mounted on the outer side of the cargo box frame 2. This structure may be reversed. In addition, the wing door opening/closing device mounted on the outer side of the cargo box frame may be directly mounted to the cargo box frame or to the vehicle body, or may also be mounted indirectly through e.g., a bracket to the cargo box frame or to the vehicle body.

Still alternatively, plural wing door opening/closing devices may be arranged side-by-side within the cargo box frame.

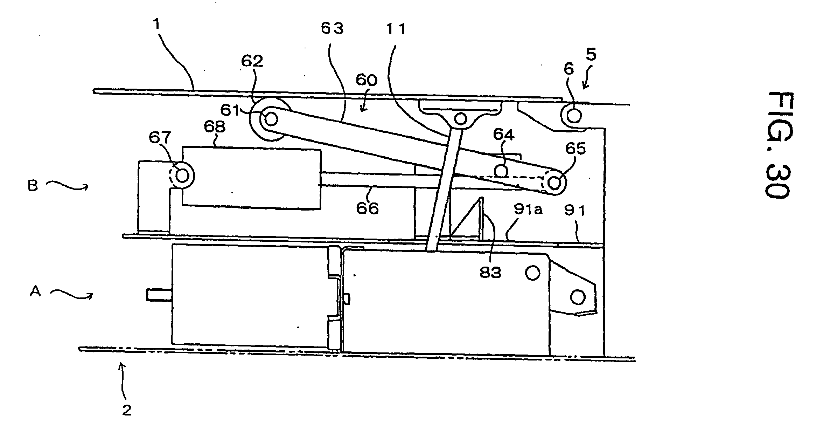

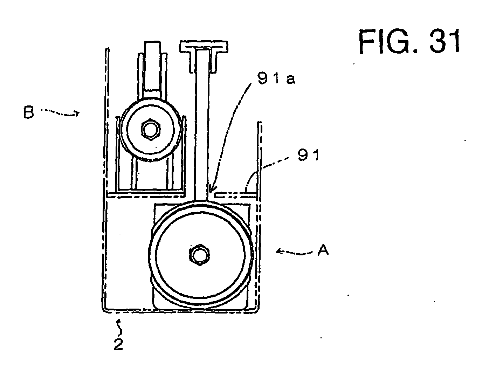

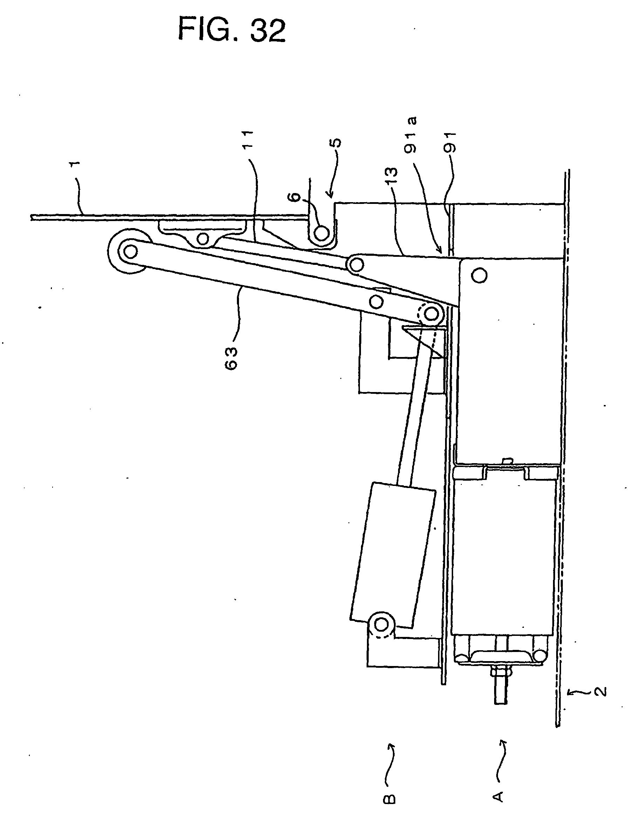

In another preferred embodiment of the present invention, plural wing door opening/closing devices may be mounted side by side or in adjacency to one another in the vertical direction, as shown in Figs.30 to 32. In this embodiment, a larger space may be secured within the cargo box.

In a wing door opening/closing apparatus according to a preferred embodiment of the present invention, the plural wing door opening/closing devices having the respective different moment characteristics include a first wing door opening/closing device generating a maximum moment at an angle of rotation of the wing door larger than an angle of rotation thereof for which the weight moment of the wing door is maximum, and a second wing door opening/closing device generating a maximum moment at an angle of rotation of the wing door smaller than the angle of rotation thereof for which the weight moment of the wing door is maximum.

Stated differently, the wing door opening/closing apparatus is made up by plural wing door opening/closing devices having respective different moment characteristics representing the relation between the moment generated by the weight of the rotating wing door and the moment generated by the wing door opening/closing device.

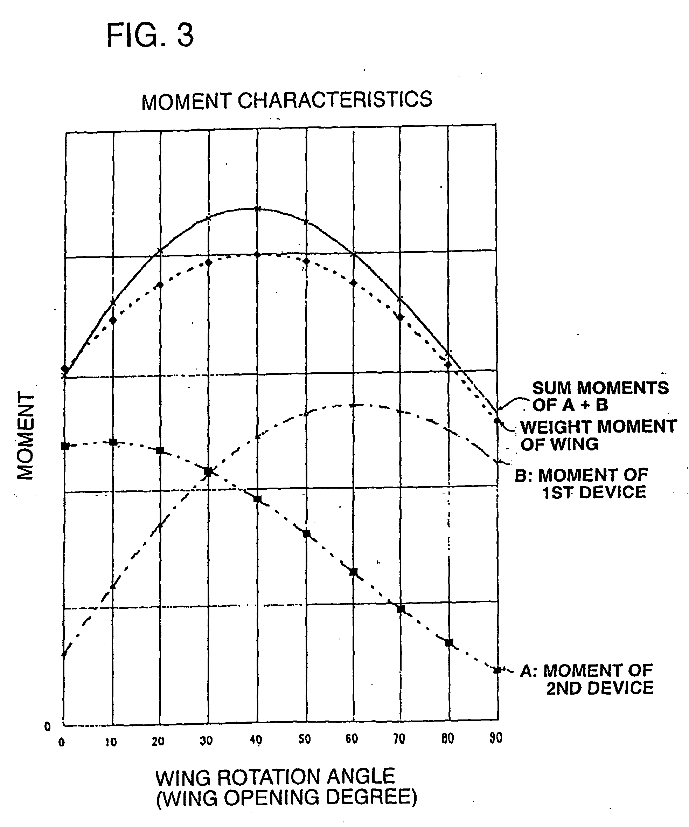

For example, referring to Fig.3, the first wing door opening/closing device A has moment characteristics shown by a curve A, whilst a second wing door opening/closing device B has moment characteristics shown by curve B, with the sum of the moment characteristics, indicated by a curve (A+B), which curve (A+B) is substantially similar to and approximately equal in the moment magnitude to a curve representing weight moment characteristics of a wing door.

As a consequence, the disparity between the moment generated by the wing door opening/closing device A is compensated by the moment generated by the other wing door opening/closing device B.

Moreover, by combining one wing door opening/closing device, operating throughout the entire range of rotation of the wing door, with another wing door opening/closing device, the range of the operation of which is limited, it is possible to elevate the swinging-up power acting on the wing door in the former half of the rotational range of the wing door. Alternatively, it is possible to elevate the swinging-up power acting on the wing door in the latter half or in an intermediate area of the rotational range of the wing door.

The wing door opening/closing apparatus according to a preferred embodiment of the present invention includes a stopper in which, on opening the wing door, at least one member of the link mechanism abuts against a member secured or fixed to the vehicle body, at a preset wing door opening angle, to inhibit the operation of the link mechanism thereby to control the maximum opening degree of the wing door.

In the first and second wing door opening/closing devices of the wing door opening/closing apparatus, according to a preferred embodiment of the present invention, the link mechanism is made up by one or plural link members, interconnected by a pin, while there is provided a guide member, such as slider or guide roll, for guiding the plural components or the pin interconnecting the respective components.

Preferably, the guide member is a component which is disposed at a fixed position to the vehicle body and which extends in a basically parallel direction to the spring axis direction of the spring (for example, a component having a guide surface or guide rail). On a point of interconnection (linking point or pivotal point) of the plural link members, a first slider or roll (such as a slider) is mounted for sliding on the guide member when the wing door is opened or closed. The guide member resistively supports the first slider as the guide member has a sliding contact with the first slider during wing door opening/closure to prohibit swinging of the spring rod.

Also preferably, the guide member is a second slider or roll pivotally mounted to the vehicle body. This second slider resistively supports the spring rod, as it has sliding contact with the spring rod, so that the spring rod is not swung during the opening/closure of the wing door.

Still alternatively, a friction member is provided at a site of connection of the link member to the wing door to cause the link member to have sliding contact with the wing door through the friction member.

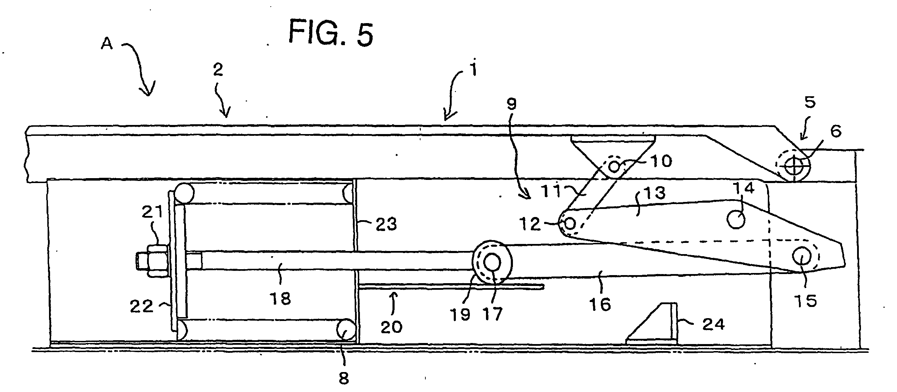

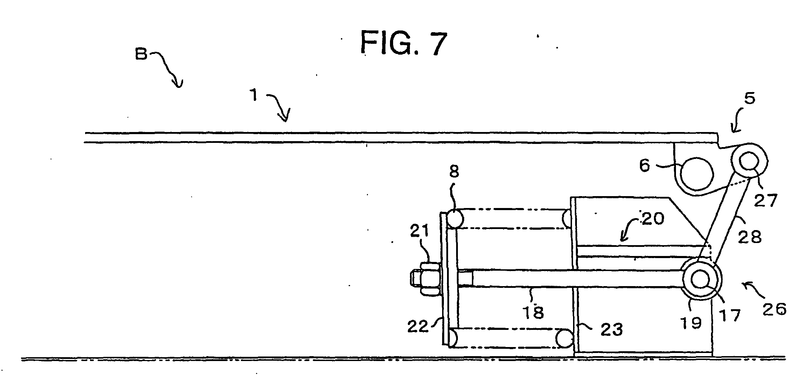

In another preferred embodiment of the present invention, shown in Figs.5 and 7, the wing door opening/closing apparatus is made up by a first wing door opening/closing device A and a second wing door opening/closing device B. The first wing door opening/closing device A includes a first-1 link member 11, pivotally connected to the inner surface of the wing door 1, a first-2 link member 13, pivotally mounted to the vehicle body 2 and pivotally connected to the first-1 link member 11, a first-3 link member 16, pivotally connected to the first-2 link member 13, a first-1 spring rod 18, connected to the first-3 link member 16, a first-1 guide member 20 for translating a junction point between the first-3 link member 16 and the spring rod 18 and a first spring 8 interposed between the vehicle body 2 and the spring rod 18. On the other hand, the second wing door opening/closing device B includes a second-1 link member 28, pivotally connected to the inner surface of the wing door 1, a second spring rod 18 pivotally connected to the second-1 link member 28, a second spring 8 interposed between the vehicle body and the second spring rod, and a second-1 guide member 20 for translating a junction point between the second-1 link member 28 and the second spring rod 18.

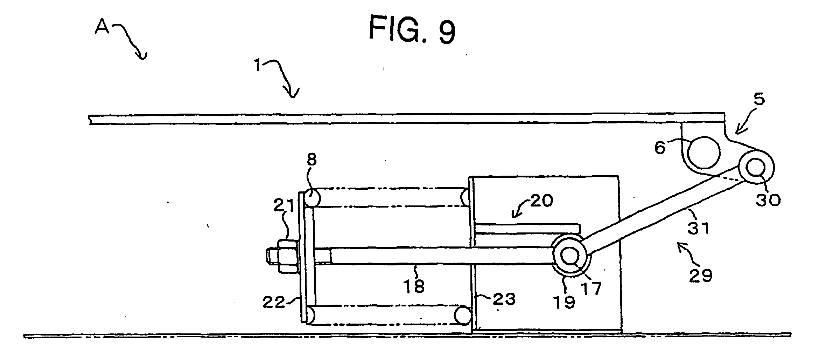

In a preferred embodiment of the present invention, shown in Figs.7 and 9, the wing door opening/closing apparatus of the present invention is made up by a first wing door opening/closing device A and a second wing door opening/closing device B. Each of the first and second wing door opening/closing devices A, B includes first link members 28, 31, pivotally connected to the inner side of the wing door, a spring rod 18 connected to the first link members 28, 31, respectively, a spring 8 interposed between the vehicle body and the spring rod 18, and a guide member 20 for translating a junction point between the first link members 28, 31 and the spring rod 18. In the closed position of the wing door, an angle defined between the direction of the spring axis of the spring 8 and the first link members 28, 31 is set to be smaller in the first wing door opening/closing device than the angle so defined in the second wing door opening/closing device.

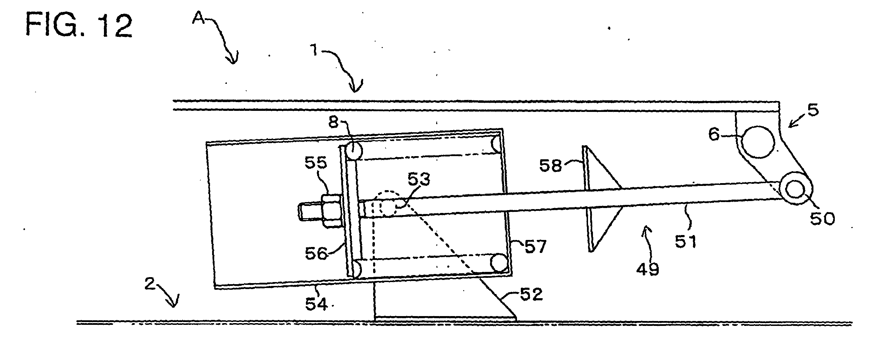

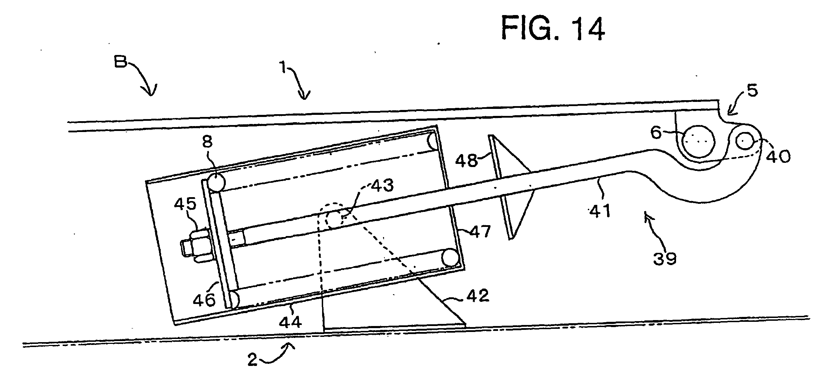

In another preferred embodiment of the present invention, shown in Figs.12 and 14, the wing door opening/closing apparatus according to the present invention is made up by the first wing door opening/closing device A and the second wing door opening/closing device B. Each of the first and second wing door opening/closing devices A and B is pivotally connected to the inner surface of the wing door, and includes first link members 41, 51, pivotally mounted to the vehicle body, and a spring 8 interposed between the vehicle body and the first link members 41, 51. In the closed position of the wing door 1, the arm of the moment drawn down vertically from a fulcrum point (pin) 6 of the wing door 1 to a line segment interconnecting a point of connection of the spring 8 to the first link members 41, 51, so as to be pivoted relative to the vehicle body. and a point of connection (pin) 6 of the first link members 41, 51 and the wing door 1 is set so as to be longer in the first wing door opening/closing , device than in the second wing door opening/closing device.

In another preferred embodiment of the present invention, shown in Figs.5, 17 and 25, the wing door opening/closing apparatus of the present invention is made up by the first wing door opening/closing device A and the second wing door opening/closing device B. The first wing door opening/closing device A includes a first-1 link member 11, pivotally connected to the inner surface of the wing door 1, a first-2 link member 13, pivotally mounted to the vehicle body and pivotally connected to the first·1 link member 11, a first-3 link member 16, pivotally connected to the first-2 link member 13, a first-1 spring rod 18, connected to the first-3 link member 16, a first-1 guide member 20 for translating a junction point between the first-3 link member 16 and the spring rod 18, and a first spring 8 interposed between the vehicle body 2 and the spring rod 18. On the other hand, the second wing door opening/closing device B includes a second-1 link member 63, pivotally slidably connected to the inner side of the wing door and pivotally mounted to the vehicle body, a second spring rod 66, connected to the second-1 link member 63, and second springs 70, 81, pivotally mounted to the vehicle body and connected to the second-1 link member 63, with or without interposition of the second spring rod 66.

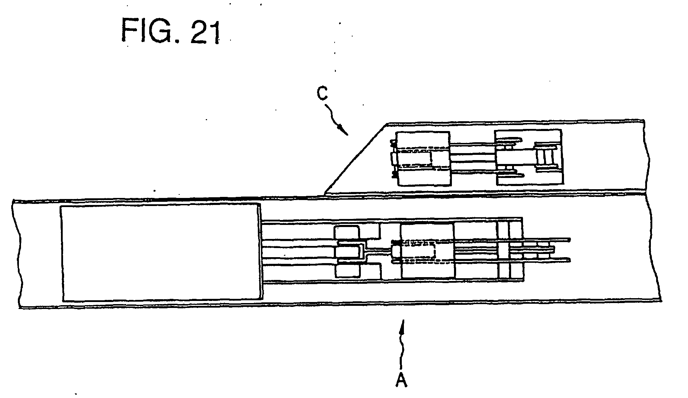

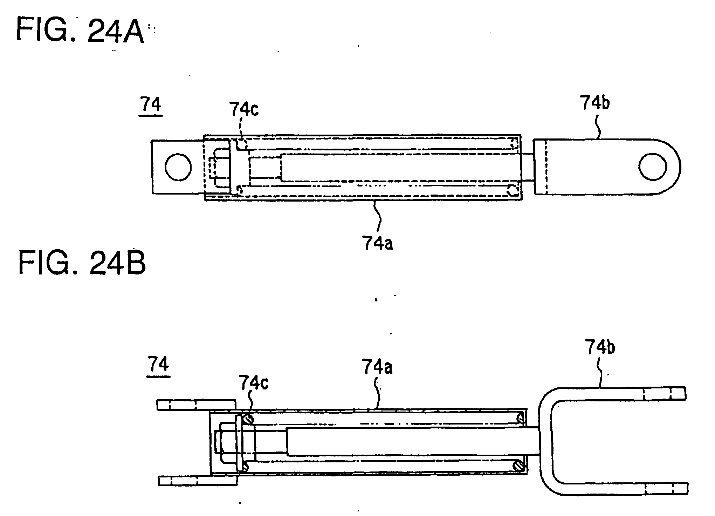

In another preferred embodiment of the present invention, shown in Fig.5 and 21, the wing door opening/closing apparatus of the present invention is made up by a first wing door opening/closing device A and a second wing door opening/closing device C. The first wing door opening/closing device A includes a first-1 link member 11, pivotally connected to the inner surface of the wing door 1, a first-2 link member 13, pivotally mounted to the vehicle body 2 and pivotally connected to the first-1 link member 11, a first-3 link member 16, pivotally connected to the first-2 link member 13, a first-1 spring rod 18, connected to the first-3 link member 16, a first-1 guide member 20 for translating a junction point between the first-3 link member 16 and the spring rod 18 and a first spring 8 interposed between the vehicle body 2 and the spring rod 18. On the other hand, the second wing door opening/closing device C includes a second-1 link member 73, pivotally connected to the inner surface of the wing door 1, a second spring member 74 connected to the second-1 link member 73, a second spring 74a (see Fig.24) interposed between the vehicle body and the second spring member 74 for pivoting relative to the vehicle body and a second-2 link member 75 pivotally mounted to the vehicle body and connected to a junction point between the second·1 link member 73 and the second spring member 74.

In a preferred embodiment of the present invention, the wing door opening/closing apparatus has first and second wing door opening/closing devices having different operating ranges.

In a preferred embodiment of the present invention, there is provided a stopper 83 for halting the operation of at least one of the plural wing door opening/closing devices at the time of opening the wing door. With this stopper, it is possible to limit one of the plural wing door opening/closing devices to provide for different operating ranges of the plural wing door opening/closing devices.

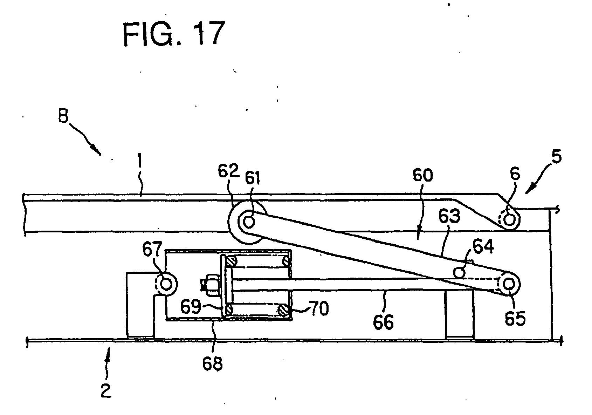

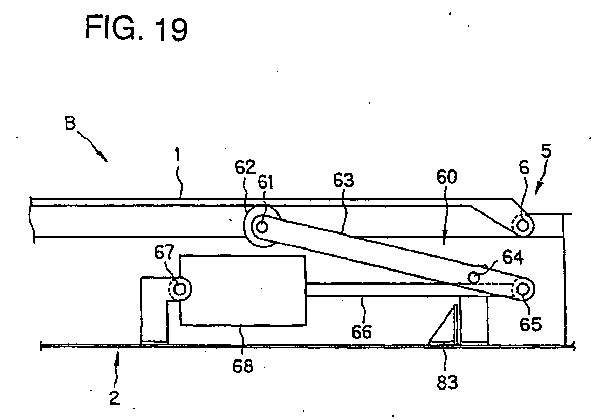

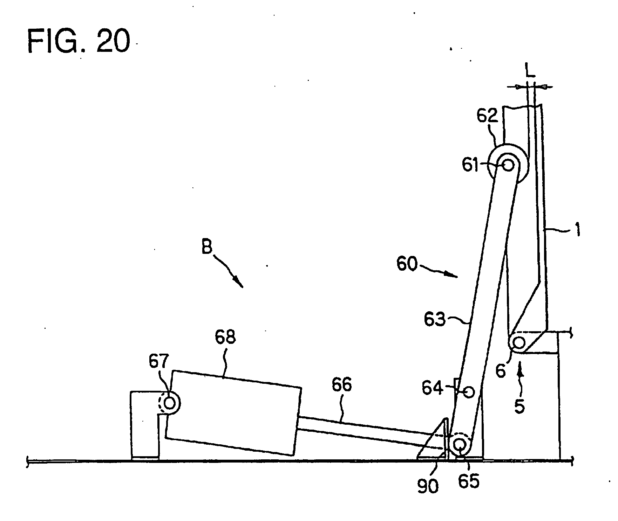

In a preferred embodiment of the present invention, shown in Fig. 19, the wing door opening/closing device B, on which acts the stopper 83, includes a spring 70 (see Fig.17) for generating the driving force for opening/closing the wing door 1, and a link mechanism 60, pivotally connected to the vehicle body. The link mechanism 60 has its one end pivotally slidably connected to the inner side of the wing door 1, while having its other end connected to the spring 70, to transmit the driving force of the spring to the wing door 1. The portion of the link mechanism having a sliding contact with the inner surface of the wing door is separated away from the slide contact surface of the wing door 1, as indicated at L in Fig.20, when the stopper 83 is actuated to halt the operation of the wing door opening/closing device on which acts the stopper (see Fig.20)..

In a preferred embodiment of the present invention, at least one of the plural wing door opening/closing devices includes a torsion spring interposed between the inner surface of the wing door and the vehicle body. By selecting the stroke of this torsion spring to be smaller and by selecting that of the other wing door opening/closing device to be longer, it is possible to increase the swinging-up force acting on the wing door 1 in the former half of the wing door rotation in opening the wing door.

In a preferred embodiment of the present invention, in at least one and preferably in either of the wing door opening/closing devices, there are provided a spring and a link mechanism for boosting the spring force of the spring to develop a larger swinging-up power. That is, with the wing door opening/closing apparatus according to the present invention, having the link mechanism, it is possible not only to hold the wing door at a preset angle of rotation, but also to hoist the wing door without using manual operations.

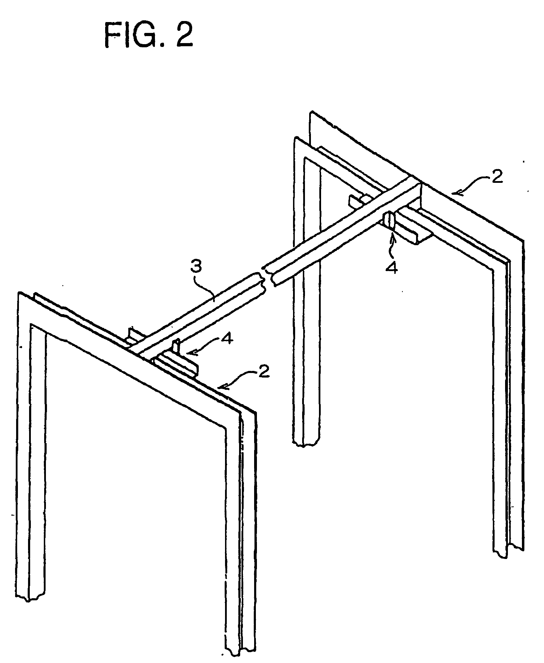

In another preferred embodiment of the present invention, all of the plural wing door opening/closing devices are arranged in the vicinity or on top of the roof portion of the vehicle (see Figs.2, 4 and 31).

The wing door opening/closing apparatus according to the present invention may be used with advantage as a device for closing at least a portion of the lateral side and at least a portion of the roof portion of the vehicle body of, for example, a truck. In addition, the wing door opening/closing apparatus according to the present invention may also be used as a device for opening/closing the wing door provided to a vehicle other than a truck.

The wing door opening/closing apparatus according to the present invention may be used with advantage as a device for opening/closing a wing door pivotally mounted to the vehicle body of, for example, a truck, in the vicinity of the roof portion of a cargo box, for covering the roof portion and lateral sides of the cargo box, in particular as a device for swinging-up and opening the wing door. When the wing door opening/closing apparatus of the present invention is applied to a vehicle, such as a truck, having the cargo box, this wing door opening/closing apparatus can be housed within the cargo box frame (the frame portion secured to or formed as one with the vehicle body).

### [EMBODIMENTS]

For further clarifying the above-described preferred embodiment of the present invention, reference is had to the accompanying drawings for explanation of the certain preferred embodiments of the present invention.

### [First Embodiment]

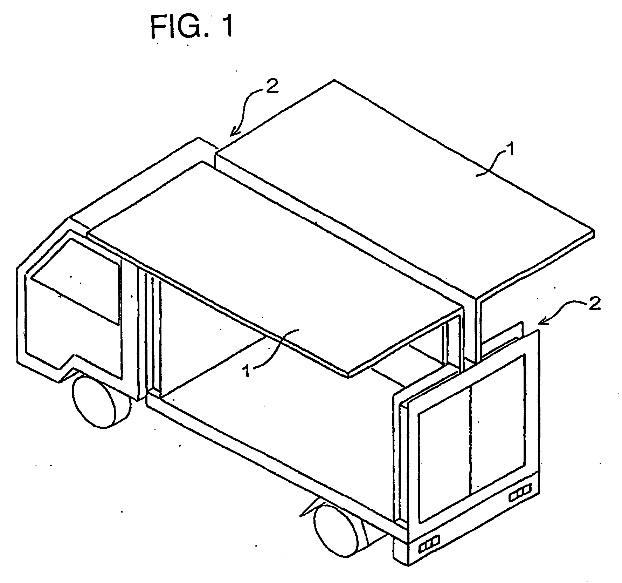

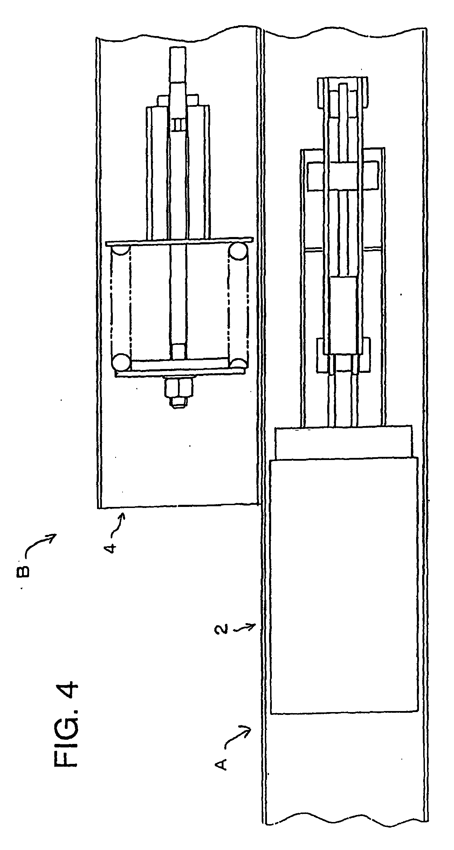

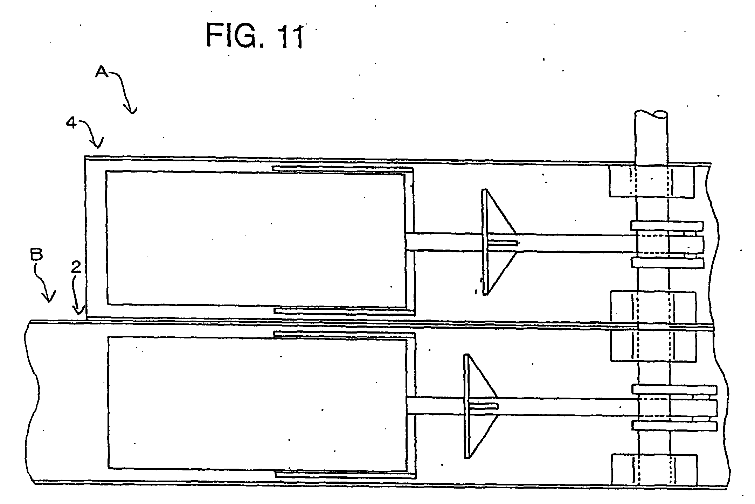

A wing door opening/closing apparatus according to a first embodiment of the present invention is now explained. Fig.4 is a top plan view for illustrating the overall structure of the wing door opening/closing apparatus, preferably applied to a truck shown in Fig.1, according to the first embodiment of the present invention. It should be noted that Fig.4 shows this wing door opening/closing apparatus from above, with a portion of the wall section of the cargo box frame 2 partially removed, as does Fig.11, as later explained.

Referring to Fig.4, the wing door opening/closing apparatus according to the first embodiment of the present invention includes a first wing door opening/closing device A, mounted between the wing door 1 and the vehicle body and accommodated within the cargo box frame 2, and a second wing door opening/closing device B mounted within a bracket 4 provided outside the cargo box frame 2. Of these, the first wing door opening/closing device A is first explained.

### (First wing door opening/closing device A)

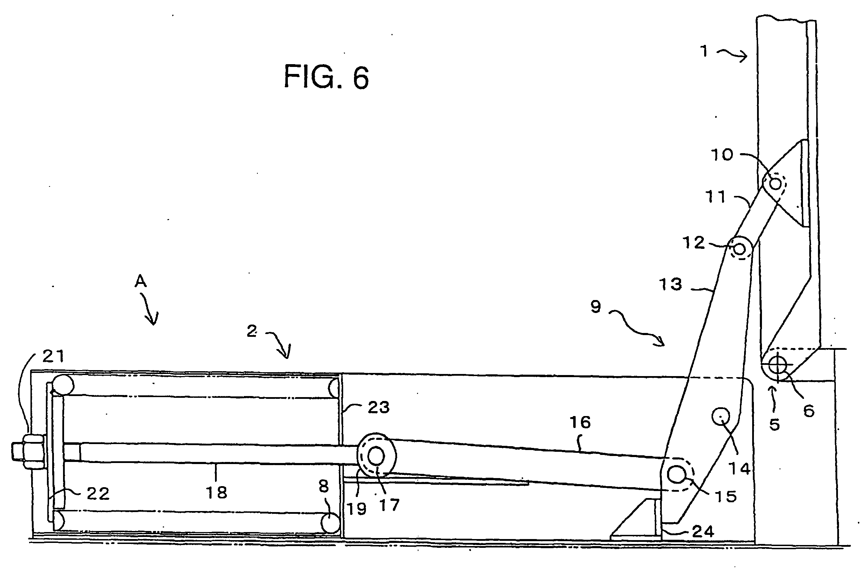

Fig.5 is a front view for illustrating the structure of the first first wing door opening/closing device A shown in Fig.4. It should be noted that Fig.5 shows this wing door opening/closing apparatus along a longitudinal direction of the vehicle, with a portion of the wall section of the cargo box frame 2 partially removed, as does Fig.6, as later explained.

Referring to Fig.5, the wing door 1 has its one lateral side pivotally mounted via hinge 5 to the lateral upper side of the vehicle body (cargo box) at an upper part of the cargo box frame in the vicinity of the roof portion of the cargo box. A pin 6 of the hinge 5 operates as a fulcrum point of the wing door 1. The wing door 1 is bent at its lateral side which operates as a roof portion overlying the vehicle body or the roof portion of the cargo box, with the other bent side operating as a lateral side, not shown, covering the lateral side of the vehicle body or the cargo box.

The first wing door opening/closing device A includes a spring 8 arranged on the top of the cargo box frame 2 and having its lateral side carried by the vehicle body or by the cargo box frame 2 for generating the force of biasing the wing door 1 into rotation, and a link mechanism 9 for transmitting the biasing force of the spring 8 to the wing door 1.

In the link mechanism 9, a first link member 11 is pivotally connected to the inner lateral side of the wing door 1 via pin 10. A second link member 13 is pivotally connected to the first link member 11 via pin 12. The second link member 13 is pivotally mounted to the vehicle body via pin 14. A third link member 16 is pivotally connected to the second link member 13 via pin 15. A spring rod 18 is connected to the third link member 16 via pin 17. A first slider 19 is pivotally mounted by pin 17. a first guide member 20 (lower guide member) is secured on the vehicle body. During rotation of the wing door, the first slider 19 is guided for translation along the axis of the spring rod 18 (the axis of the spring 8) by the first guide member 20.

An adjustment nut 21 for adjusting the initial spring length is threadedly engaged with the spring rod 18. A first spring retainer 22 is carried by the adjustment nut 21. A second spring retainer 23 is secured to the vehicle body. The aforementioned spring 8 is interposed under compression between the first spring retainer 22 and the second spring retainer.

A stopper 24 is provided to the vehicle body for facing the end of the second link member 13 along its pivoting direction.

### (Second wing door opening/closing device B)

Fig.7 is a front view for illustrating the structure of the second wing door opening/closing device B shown in Fig.4. Referring to Fig.7, the second wing door opening/closing device B similarly includes a spring 8 having its side carried by the vehicle body or by the cargo box frame 2 for generating the biasing force for rotating the wing door 1 and a link mechanism 26 for transmitting the biasing force of the spring 8 to the wing door 1.

In the link mechanism 26, the first link member 28 is pivotally connected via pin 27 to the inner side of the wing door 1 via pin 27. The spring rod 18 is connected via pin 17 to the first link member 28. The first slider 19 is pivotally mounted on the pin 17. The first guide member 20 (upper guide member) is secured to the vehicle body. During rotation of the wing door, the first slider 19 is guided for translation by the first guide member 20 along the axis of the spring rod 18 (direction of the spring axis of the spring 8).

The adjustment nut 21 for adjusting the initial spring length is threadedly engaged with the spring rod 18. The first spring retainer 22 is carried by the adjustment nut 21. The second spring retainer 23 is secured to the vehicle body. The aforementioned spring 8 is interposed under compression between the first spring retainer 22 and the second spring retainer.

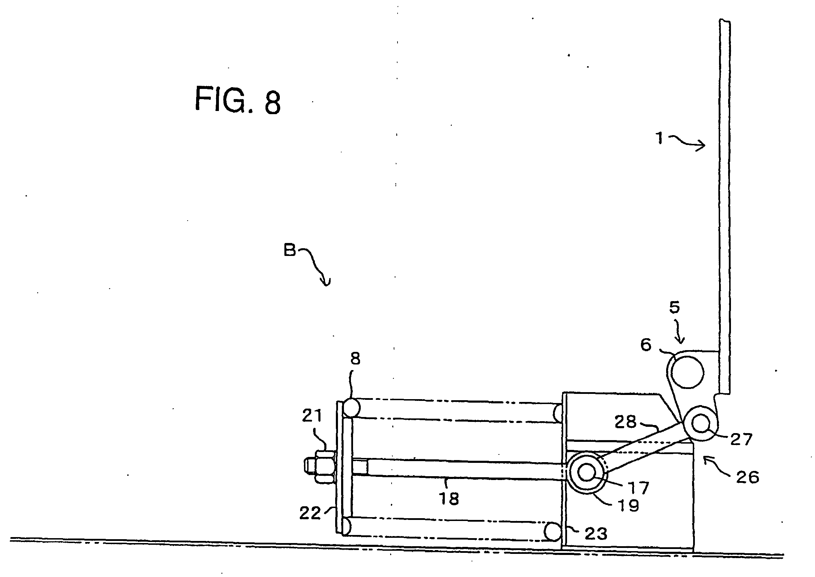

Referring to Fig.5, showing the closed state of the wing door 1 (first wing door opening/closing device A), to Fig.7 (second wing door opening/closing device B) and to Figs.6 and 8 showing its opened state (first wing door opening/closing device A and second wing door opening/closing device B), the operation of the above-described first wing door opening/closing device A according to the first embodiment is now explained.

When the operator unlocks the wing door 1, to cause rotation of the wing door 1, the springs 8, 8 are stretched, in the first wing door opening/closing device A and in the second wing door opening/closing device B, towards left in Figs.5 and 7, respectively. Since the direction of movement of the first slider 19 is controlled to be along the spring axis direction, by the second guide members 20, 20, the spring rods 18, 18 are also translated towards left in Fig.5, 7, respectively. As a consequence, the third link member 16 in the first wing door opening/closing device A and the first link member 28 in the second wing door opening/closing device B are swung in the clockwise direction as the overall system is translated towards left in Figs.5 and 7.

In this manner, the second link member 8 [sic. 13] in the first wing door opening/closing device A is swung in the clockwise direction in Fig.2 [sic. 5], while the first link member11 is uplifted, such that the force operating in the opening direction is transmitted to the wing door 1. In the second wing door opening/closing device B, the first link member 28 is swung in the clockwise direction in Fig.7, whereby the force operating in the opening direction is transmitted to the wing door 1. By the resultant force of moment generated by the first wing door opening/closing device A and by the second wing door opening/closing device B, the wing door 1 is rotated in its opening direction.

It should be noted that moment characteristics of the first wing door opening/closing device A differ from those of the second wing door opening/closing device B. That is, the first wing door opening/closing device A is arranged for generating the maximum moment at an angle of rotation larger [sic. smaller] than an angle of rotation of the wing door 1 which gives the maximum weight moment of the wing door 1, while the second wing door opening/closing device B is arranged for generating the maximum moment at an angle of rotation larger than the angle of rotation of the wing door 1 which gives the maximum weight moment of the wing door 1. By this structure, a "curve showing the relation between the angle of rotation of the wing door 1 and the moment of the resultant force generated by the first wing door opening/closing device A and the second wing door opening/closing device B" may be made substantially coincident with a "curve showing the relation between the angle of rotation of the wing door 1 and the weight moment thereof" insofar as the magnitude of the moment and the curve shape. As a consequence, the wing door 1 is hoisted (swung-up) smoothly, without acute acceleration or deceleration at an optional angle of rotation of the wing door 1.

The reason the first wing door opening/closing device A (see Figs.5 and 6) has moment characteristics shown by curve A in Fig.3 and the second wing door opening/closing device B (see Figs.7 and 8) has moment characteristics shown by curve B in Fig.3, is now explained.

That is, with the first wing door opening/closing device A, the angle between the axial direction of the spring 8 and the link mechanism 9, above all the third link member 16 connected to the spring rod 18, is closer to 180°, so that the majority of the force generated by the spring 8 operates as the force to swing (rotate) the second link member 13 from the initial stage of the range of the rotational angle of the wing door 1. As a consequence, the first wing door opening/closing device A causes a large moment to act on the wing door 1 in the initial stage of rotation of the wing door 1.

On the other hand, with the second wing door opening/closing device B, the angle between the axial direction of the spring 8 and the link mechanism 26, above all the first link member 28 connected to the spring rod 18, is smaller [sic. larger], so that the majority of the force generated by the spring 8 operates as the force of straightening the link mechanism 26 (spring rod 18 and the link member 28) at the initial stage of the range of the rotational angle of the wing door 1. As a consequence, the second wing door opening/closing device B causes a large moment to act on the wing door 1 in the latter stage of rotation of the wing door 1.

Moreover, when the wing door 1 has been rotated up to a preset angle, the end of the second link member 53 shown in Fig.6 abuts against the stopper 24, while the first slider 19 shown in Fig.8 abuts against an outer lateral surface of the second spring retainer 23, thus inhibiting further rotation of the wing door 1 to define (limit) the maximum opening angle of the wing door 1.

### [Second Embodiment]

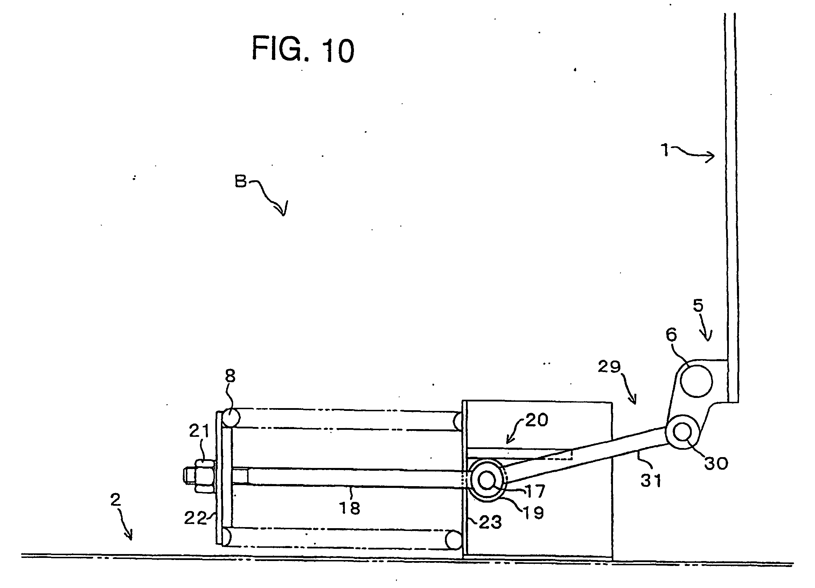

The wing door opening/closing device in the second embodiment of the present invention is now explained. The present second embodiment is a modification of the above-described first embodiment. Specifically, the first wing door opening/closing device A has been changed from the device shown in Fig.5 to the device shown in Fig.9. Fig.10 shows the operation of the first wing door opening/closing device A shown in Fig.9.

Referring to Fig.9, the first wing door opening/closing device A includes a spring 8 having its one side carried by the vehicle body or by the cargo box frame 2 and adapted for generating the force of biasing the wing door 1 into rotation, and a link mechanism 29 for transmitting the biasing force of the spring 8 to the wing door 1.

In the link mechanism 29, a first link member 31 is pivotally connected to the inner lateral side of the wing door 1 via pin 30. The spring rod 18 is connected to the first link member 31 via pin 17. The first slider 19 is pivotally mounted on the pin 17. The first guide member 20 (upper guide plate) is secured to the vehicle body. During rotation of the wing door, the first slider 19 is guided for performing a translational movement along the axis of the spring rod 18 (the axis of the spring 8) by the first guide member 20.

An adjustment nut 21 for adjusting the initial spring length is threadedly engaged with the spring rod 18. A first spring retainer 22 is carried by the adjustment nut 21. A second spring retainer 23 is secured to the vehicle body. The aforementioned spring 8 is interposed under compression between the first spring retainer 22 and the second spring retainer.

This first wing door opening/closing device A (see Figs.9 and 10) has moment characteristics similar to those of the first wing door opening/closing device A shown in Figs.5 and 6 (see Fig.3). Thus, if the first wing door opening/closing device A is combined with the second wing door opening/closing device B shown in Figs.7 and 8, the wing door opening/closing apparatus of the second embodiment operates similarly to the wing door opening/closing device of the first embodiment described above.

The reason the first wing door opening/closing device A (see Figs.9 and 10) has moment characteristics indicated by a curve A in Fig.3 is now explained.

That is, in the first wing door opening/closing device A, the angle between the axial direction of the spring 8 and the link mechanism 29, above all the fist link member 31 connected to the spring rod 18, is smaller at the initial position shown in Fig.9, that is smaller than the angle between the spring rod 18 shown in Fig.7 and the first link member 28. Thus, the majority of the force generated by the spring 8 operates as the force of pivoting the first link member 31 from the initial stage of rotation, that is, from a beginning portion of the range of the rotational angle of the wing door 1. As a consequence, the first wing door opening/closing device A causes a large moment to operate on the wing door 1 at the initial stage of rotation of the wing door 1.

Moreover, when the wing door 1 has been rotated up to a preset angle, the first sliders 19, 19 shown in Figs.8 and 9 abut against one outer lateral surfaces of the second spring retainers 23, 23, thus inhibiting further rotation of the wing door 1 to prescribe the maximum opening angle of the wing door 1.

### [Third Embodiment]

The wing door opening/closing apparatus according to a third embodiment of the present invention is now explained. Fig.11 is a top plan view showing the overall structure of the wing door opening/closing apparatus according to the third embodiment of the present invention.

Referring to Fig.11, the wing door opening/closing apparatus according to the third embodiment of the present invention includes a second wing door opening/closing device B, mounted between the wing door 1 and the vehicle body and accommodated within the cargo box frame 2, and a first wing door opening/closing device A mounted within a bracket 4 provided outside the cargo box frame 2. Of these, the first wing door opening/closing device A is first explained.

### (First wing door opening/closing device A)

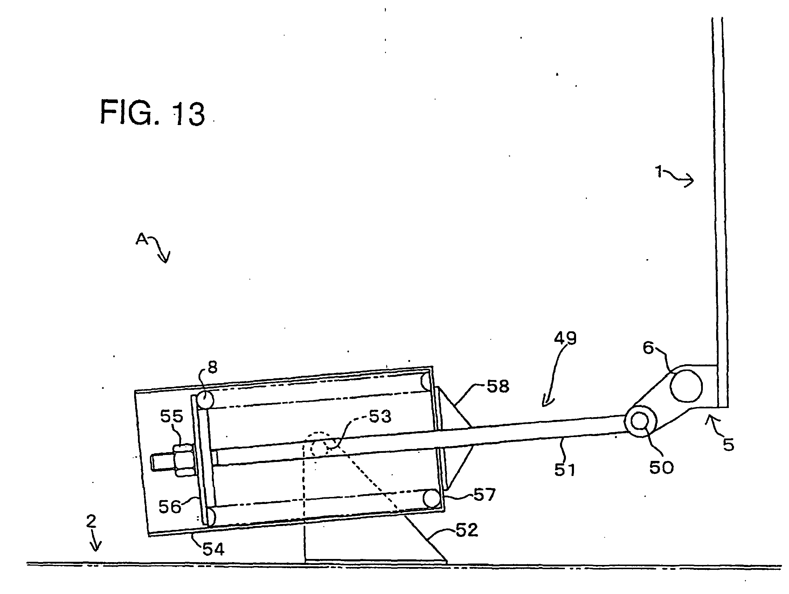

Fig.12 is a front view for illustrating the structure of the first wing door opening/closing device A shown in Fig.11, and Fig.13 illustrates the operation for Fig. 12. Referring to Figs.12 and 13, the first wing door opening/closing device A includes a spring 8 having its one side retained by the vehicle body or the cargo box frame 2 and adapted for generating the force of biasing the wing door 1 into rotation, and a link mechanism 49 for transmitting the biasing force of the spring 8 to the wing door 1.

In the link mechanism 49, a first link member 51 in the form of a straight-shaped rod is pivotally connected via pin 50 to the inner side of the wing door 1. Within the cargo box frame 2, a plate (bracket) 52 is secured to the vehicle body. A spring cover 54 is pivotally mounted via pin 53 to the plate 52. Within the spring cover 54, there is accommodated the spring 8, while there is also inserted the first link member 51. An adjustment nut 55 for adjusting the initial spring length is threadedly engaged with the first link member 51. A first spring retainer 56 is carried by the adjustment nut 55. A second spring retainer 57 is formed on one inner side of the spring cover 54. The aforementioned spring 8 is interposed under compression between the first spring retainer 56 and the second spring retainer 57.

A stopper 58 is provided to the first link member 51 for facing one outer side of the spring cover 54.

### (Second wing door opening/closing device B)

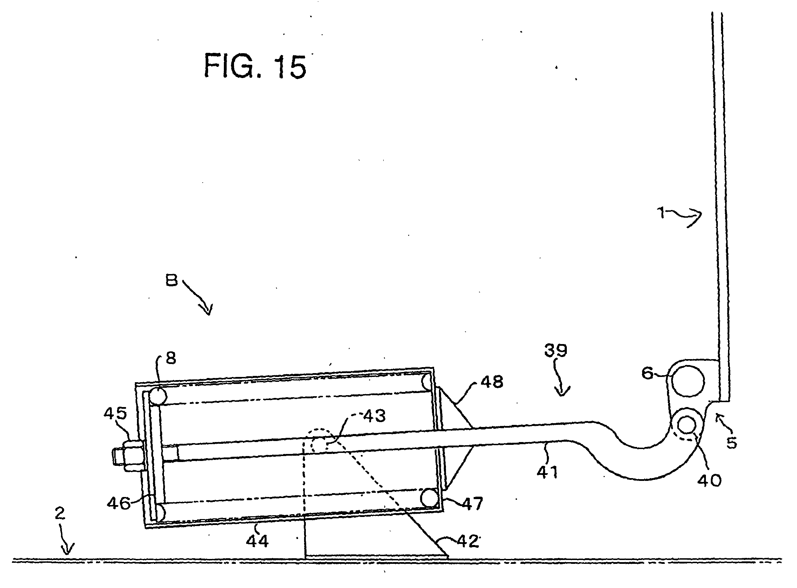

Fig. 14 is a front view for illustrating the structure of the second wing door opening/closing device B shown in Fig.11. Fig.15 illustrates the operation for Fig.14. Referring to Figs.14 and15, the second wing door opening/closing device B includes a spring 8 arranged on the top of the cargo box frame 2 and having its lateral side carried by the vehicle body or by the cargo box frame 2 for generating the force of biasing the wing door 1 into rotation, and a link mechanism 39 for transmitting the biasing force of the spring 8 to the wing door 1.

In the link mechanism 39, a first link member 11 having an arcuate portion is pivotally connected via pin 40 to the inner side of the wing door 1. Within the cargo box frame 2, a plate (bracket) 42 is secured to the vehicle body. A spring cover 44 is pivotally mounted to the plate 42 via pin 43. Within the spring cover 54, there is accommodated the spring 8, while there is also inserted the first link member 41. An adjustment nut 45 for adjusting the initial spring length is threadedly engaged with the first link member 41. A first spring retainer 46 is carried by the adjustment nut 45. A second spring retainer 47 is formed on one inner side of the spring cover 44. The aforementioned spring 8 is interposed under compression between the first spring retainer 46 and the second spring retainer 47.

A stopper 48 is provided to the first link member 41 for facing one outer side of the spring cover 44.

In the wing door opening/closing apparatus according to the above-described third embodiment, the first wing door opening/closing device A, shown in Figs.12 and 13, operates similarly to the first wing door opening/closing device A, according to the first embodiment, shown in Figs.5 and 6, while the second wing door opening/closing device B, shown in Figs.14 and 15, operates similarly to the second wing door opening/closing device B, according to the first embodiment, shown in Figs.7 and 8.

The reason the first wing door opening/closing device A (shown in Figs.12 and 13) has moment characteristics as shown by curve A in Fig.3, while the second wing door opening/closing device B (shown in Figs.14 and 15) has moment characteristics as shown by curve B in Fig.3, is now explained.

That is, in the first wing door opening/closing device A, the pin 6 is spaced apart more pronouncedly from the first ink member 51 (along the direction of the spring axis of the spring 8) in the initial position shown in Fig. 12. Let the force generated by the spring 8 be F and let the length of a plumb line drawn from pin 6 to a line segment of the force F (line segment passing through the pins 53 and 50) be L. The moment M generated by the first wing door opening/closing device A then may be represented by M = FxL. In this first wing door opening/closing device A, L is of a longer length, at the initial position, as shown in Fig. 12, so that the major portion of the force generated by the spring 8 acts for rotating the wing door 1 as from the beginning portion of the angular extent of the wing door 1. The result is that the first wing door opening/closing device A applies a large moment to the wing door 1 at the beginning portion of the angular extent of the wing door 1.

On the other hand, with the second wing door opening/closing device B, the angle between the axial direction of the spring 8 and the straight line passing through the pins 40 and 6 is smaller such that the axial direction is substantially aligned with the straight line through pins 40 and 6. If the force generated by the spring 8 is F and the length of a normal line drawn from pin 6 to a line segment of the force F (line segment passing through the pins 43 and 40) is L, the moment M generated by the first wing door opening/closing device A then may be represented by M = FxL. In this second wing door opening/closing device B, L is of a shorter length, at the initial position, as shown in Fig. 14, so that only small moment is generated in the beginning portion of the rotational extent of the wing door 1, while a larger moment is generated in the latter stage of the rotation of the wing door 1

Meanwhile, when the wing door 1 has been rotated up to a preset angle, the stopper 48 shown in Fig.13 and the stopper shown in Fig.15 abuts against one outer lateral surfaces of the spring covers 44, 54, thus inhibiting further rotation of the wing door 1 to prescribe the maximum opening angle of the wing door 1.

### [Fourth Embodiment]

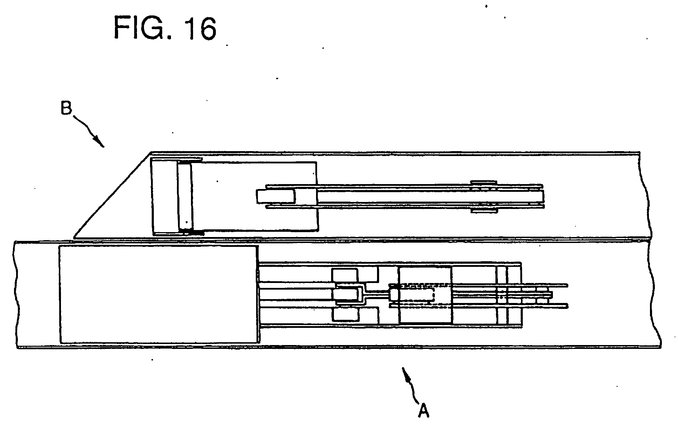

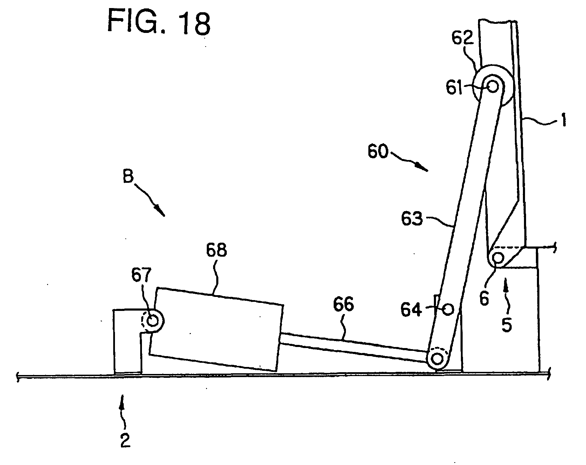

The wing door opening/closing apparatus according to a fourth embodiment of the present invention is now explained. The wing door opening/closing apparatus according to the fourth embodiment is a combination of the first wing door opening/closing device A shown in Fig.5 and the second wing door opening/closing device B shown in Fig. 17, in the horizontally juxtaposed state, as shown in Fig.16. Fig.18 illustrates the operation for the second wing door opening/closing device B shown in Fig.17. It should be noted that the above-described first embodiment is to be referenced as to the first wing door opening/closing device A and that the following explanation is centered about the second wing door opening/closing device B shown in Fig.17.

Referring to Fig.17, the second wing door opening/closing device B includes a second spring 70 having its one end retained by the vehicle body or by the cargo box frame 2 for generating the force of biasing the wing door 1 into rotation, and a link mechanism 60 for transmitting the biasing force of the second spring 70 to the wing door 1.

The link mechanism 60 includes a second-1 link member 63 pivotally and slidably connected to the inner side of the wing door 1 and pivotally mounted to the vehicle body. A second spring rod 66 is connected via pin 65 to the second-1 link member 63.

On a side where the second-1 link member 63 is connected to the inner side of the wing door 1 is mounted a slider 62 via pin 61. A first spring retainer 69 is carried at an end of the second spring rod 66 via adjustment nut. A spring cover 68 is pivotally mounted via pin 67 to the vehicle body 2. The inner surface of the spring cover 68 operates as the second spring retainer. A second spring 70 is mounted under compression between the first spring retainer 69 and the inner surface of the spring cover 68.

The operation of the second wing door opening/closing device B is now explained. Referring to Figs.17 and 18, when the wing door 1 is opened, the spring 70 is stretched, with the opening of the wing door 1, so that the spring rod 66 is moved towards left, while being rotated clockwise, in Fig.17. Thus, the second-1 link member 63 is pivoted relative to the wing door 1 and to the vehicle body 2, as the second-1 link member 63 is slid relative to the wing door 1, via slider 62, thus swinging up the wing door 1. Meanwhile, the operation which is the reverse of the above-described operation occurs in closing the wing door 1.

### [Fifth Embodiment]

The wing door opening/closing apparatus according to the fifth embodiment is now explained. The present fifth embodiment is a modification of the fourth embodiment and is a combination of the first wing door opening/closing device A shown in Fig.5 and the second wing door opening/closing device B shown in Fig.19, in the horizontally juxtaposed state, as shown in Fig.16. Fig.20 illustrates the operation for the second wing door opening/closing device B shown in Fig.19. It should be noted that the above-described first and fourth embodiments are to be referenced as to the first wing door opening/closing device A and as to the basic structure of the second wing door opening/closing device B, respectively, and that the following explanation is to be centered about the difference between the second wing door opening/closing device B shown in Fig.17 and the second wing door opening/closing device B of the present embodiment.

Referring to Fig.19, the wing door opening/closing apparatus of the present embodiment includes a stopper 83 for halting the operation of the second wing door opening/closing device B of the plural wing door opening/closing devices A and B, at a preset position, during opening the wing door. The wing door opening/closing device B, on which acts the stopper 83, includes a second spring 70 (see Fig.17), for generating the driving force (swinging up force) for opening/closing the wing door 1, and a link mechanism 60, pivotally mounted to the vehicle body 2, and having its one side slidably and pivotally connected to the inner side of the wing door 1 and having its opposite side connected to the second spring 70 for transmitting the driving force of the second spring 70 to the wing door 1. The link mechanism 60 includes the second-1 link member 63. A slider 62 is mounted via pin 61 to one end of the second-1 link member 63, the other end of which mounts a spring rod 66 through pin 65. The stopper 83 is adapted for abutting against the link mechanism 60-or the second-1 link member 63 at a preset angle of rotation of the wing door 1 to halt further swinging of the link mechanism 60 or the second-1 link member 63.

The operation of the second wing door opening/closing device B is now explained. Referring to Figs.19 and 20, if, during rotation of the wing door 1, the wing door 1 has reached a preset angle of rotation, the second-1 link member 63 abuts against the stopper 83 to halt further pivoting of the second-1 link member 63. The wing door 1 continues to be swung up under the driving force generated by the first wing door opening/closing device A shown in Fig.5. Thus, the portion of the link mechanism 60 having sliding contact with the inner side of the wing door 1, that is the slider 62, is spaced apart by L from the slide contact surface with the wing door 1 when the stopper 83 is in operation and the operation of the wing door opening/closing device B has ceased. By this, the driving force generated by the second wing door opening/closing device B ceases to act on the wing door 1. That is, up to a preset angle of rotation (former half rotation) of the wing door 1, the driving force of the plural wing door opening/closing devices A and B act on the wing door 1 and, as from the preset angle of rotation (latter half rotation) of the wing door 1, the driving force of the sole wing door opening/closing device A acts on the wing door 1. Thus, by the wing door opening/closing apparatus comprising the combination of the first wing door opening/closing device A and the second wing door opening/closing device B having respective different operating ranges, an optimum wing door driving moment, that is an optimum swinging-up force, may be developed depending on the moment characteristics of the wing door 1.

### [Sixth Embodiment]

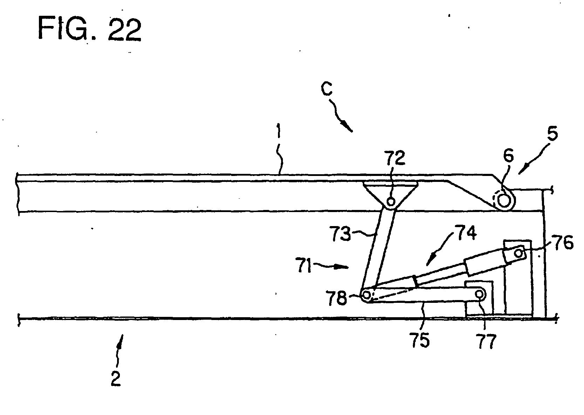

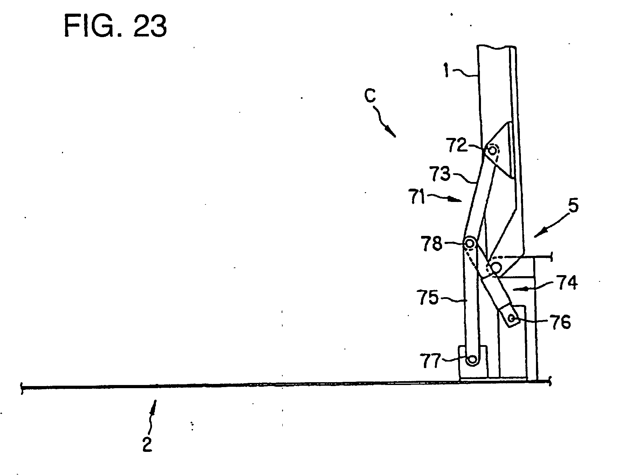

The wing door opening/closing apparatus according to a sixth embodiment of the present invention is now explained. The wing door opening/closing apparatus according to the sixth embodiment is a combination of the first wing door opening/closing device A shown in Fig.5 and the second wing door opening/closing device C shown in Fig.22, in the horizontally juxtaposed state, as shown in Fig.21. Fig.23 illustrates the operation for the first wing door opening/closing device B shown in Fig.22. It should be noted that the above-described first embodiment is to be referenced as to the first wing door opening/closing device A and that the following explanation is centered about the second wing door opening/closing device C shown in Fig.22.

The second wing door opening/closing device C shown in Fig.22, is now explained.

Referring to Fig.22, the second wing door opening/closing device C includes a second-1 link member 73, pivotally connected to the inner side of the wing door 1, a second spring member 74, connected via pin 78 to the second-1 link membèr 73, and a second-2 link member 75, pivotally mounted via pin 77 to the vehicle body 2 and connected via pin 78 to a junction point between the second-1 link member 73 and the second spring rod 74. That is, the second-1 link member 73, second spring rod 74 and the second-2 link member 75 are interconnected by the same pin 78. The link mechanism 71 is made up by the second-1 link member 73, second spring rod 74 and the second-2 link member 75.

Referring to Figs.22 and 24, the second spring member 74 includes a casing 74a, connected via pin 76 to the vehicle body 2, a rod 74b enclosed in the casing 74a and connected via pin 78 to the second-1 link member 73 and a second spring 74c interposed between the casing 74a and the rod 74b.

The operation of the second wing door opening/closing device C is now explained. Referring to Figs.2 and 23, the second spring member 74 is pivoted and simultaneously contracted, during opening the wing door 1, with swinging of the second-1 link member, as the second spring member 74 is guided by the second-2 link member 75. The second spring 74c, so far compressed by this contraction, gradually expands to develop the driving force of swinging-up the wing door 1. Meanwhile, the operation during closing the wing door 1 is the reverse of the above-described operation.

### [Seventh Embodiment]

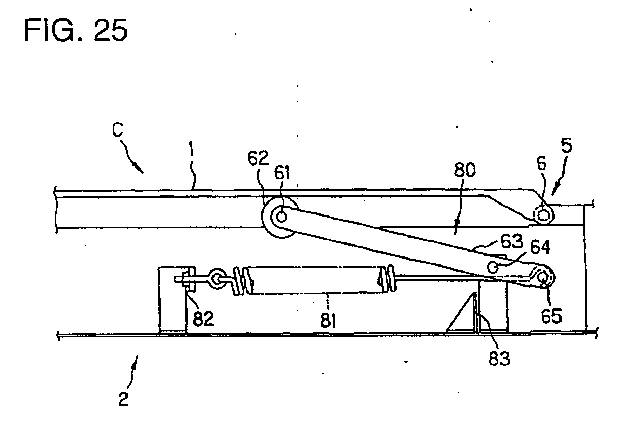

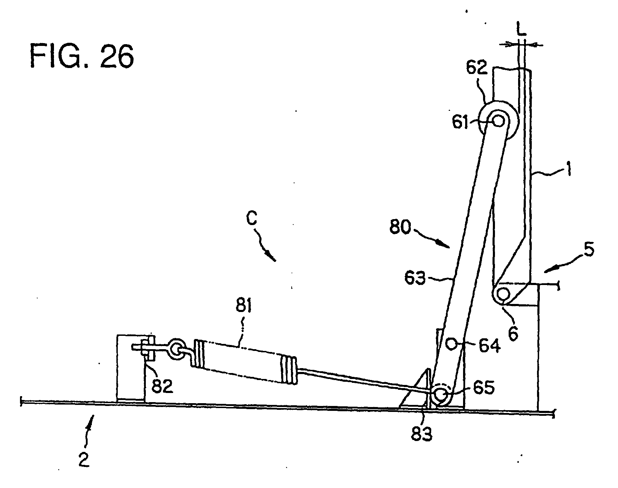

The wing door opening/closing apparatus according to a seventh embodiment of the present invention is now explained. The wing door opening/closing apparatus according to the seventh embodiment is a combination of the first wing door opening/closing device A shown in Fig.5 and a second wing door opening/closing device C shown in Fig.25, in the horizontally juxtaposed state, as in the case shown in Fig.21. Fig.26 illustrates the operation for the first wing door opening/closing device C shown in Fig.26. It should be noted that the above-described first embodiment is to be referenced as to the first wing door opening/closing device A and that the following explanation is centered about the second wing door opening/closing device C shown in Fig.25.

Referring to Fig.25, the wing door opening/closing apparatus of the present embodiment includes a stopper 83 for halting the operation of the second wing door opening/closing device C of the plural wing door opening/closing devices A and C, at a preset position, when opening the wing door. The wing door opening/closing device C, on which acts the stopper 83, includes a second spring member (tension spring) 81 for generating the driving force for opening/closing the wing door 1, and a link mechanism 80, pivotally mounted to the vehicle body 2, and having its one side slidably and pivotally connected (abutted) to the inner side of the wing door 1 and having its opposite side connected (linked) to the second spring member 81 for transmitting the driving force of the second spring member 81 to the wing door 1.

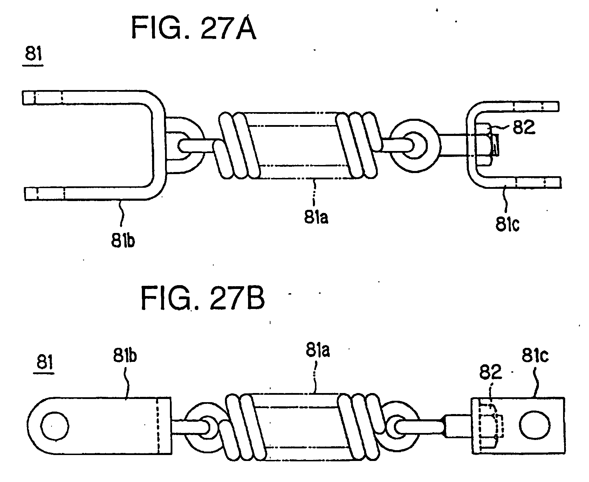

Figs.27A and 27B are detailed views showing the spring member shown in Fig.25. Referring to Figs.27A and 27B, the second spring member 81 includes a second spring (tension spring) 81a, a first connecting portion 81b for retaining one end of the second spring 81a on a pin 65 on the second-1 link member 63, and a second connecting portion 81c for pivotally mounting the opposite end of the spring 81a to the vehicle body 2.

The link mechanism 80 includes a second-1 link member 63, to one end of which is mounted the slider 62 via pin 61 and to the opposite end of which a second spring member 81 is mounted via pin 65.

The stopper 83 is mounted to the vehicle body 2 and abuts against the link mechanism 60 or the second-1 link member 63 at a preset rotational angle of the wing door 1 to halt further pivoting of the second-1 link member 63.

The portion of the link mechanism 60 having sliding contact with the inner side of the wing door 1, that is the slider 60, is spaced apart at L (see Fig.26) from the slide contact surface with the wing door 1 when the stopper 83 is in operation and the operation of the wing door opening/closing device B has ceased.

The operation of the second wing door opening/closing device C is now explained. Referring to Figs.25 and 26, when the wing door has reached a preset angle of rotation, during opening the wing door, the second-1 link member 63, which has swung in the clockwise direction in Fig.25 as a result of expansion of the second spring member 81 abuts against the stopper 83 to halt further rotation of the second-1 link member 63. The wing door 1 continues to be swung under the driving force generated by the first wing door opening/closing device A shown in Fig.5. Thus, the portion of the link mechanism 60 having sliding contact with the inner side of the wing door 1, that is the slider 62, is spaced apart by L from the slide contact surface with the wing door 1 when the stopper 83 is in operation and the operation of the wing door opening/closing device C has ceased. By this, the driving force generated by the second wing door opening/closing device C ceases to act on the wing door 1. That is, up to a preset angle of rotation (former half rotation) of the wing door 1, the driving force of the plural wing door opening/closing devices A and B acts on the wing door 1 and, as from the preset angle of rotation (latter half rotation) of the wing door 1, the driving force of the sole wing door opening/closing device A acts on the wing door 1. Thus, by the wing door opening/closing apparatus comprising the combination of the first wing door opening/closing device A and the second wing door opening/closing device B having respective different operating ranges, an optimum wing door driving moment, that is an optimum swinging-up force, may be developed depending on the moment characteristics of the wing door 1.

### [Eighth Embodiment]

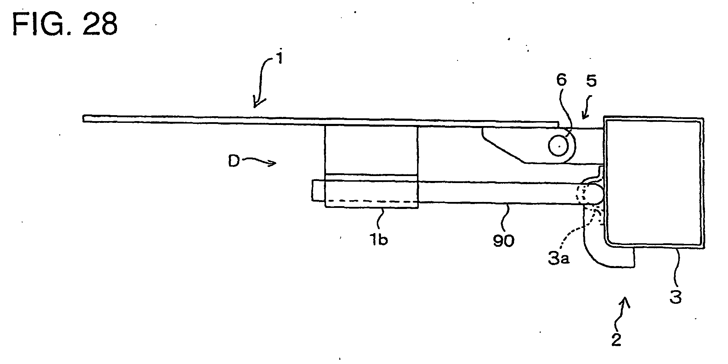

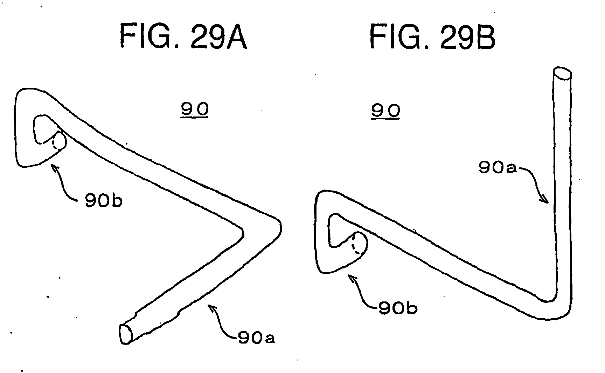

The wing door opening/closing apparatus according to an eighth embodiment of the present invention is now explained. The wing door opening/closing apparatus according to the eighth embodiment is a combination of the first wing door opening/closing device A shown in Fig.5 and a second wing door opening/closing device D shown in Fig.17, in the horizontally juxtaposed state, as shown in Fig.21. Figs.29A and 29B are detailed views of a torsion spring 90 shown in Fig.28. It should be noted that the above-described first embodiment is to be referenced as to the first wing door opening/closing device A and that the following explanation is centered about the second wing door opening/closing device D shown in Fig.28.

Referring to Fig.28, the second wing door opening/closing device D of the present embodiment includes a wing door 1, pivotally mounted to the vehicle body via pin 6 of hinge 5, a first bracket 1b mounted to the inner side of the wing door 1, a second bracket 3a mounted to the lateral surface of a center beam 3 secured to the vehicle body 2, and a torsion spring 90 mounted under compression between the first bracket 1b and the second bracket 3a (between the wing door 1 and the vehicle body 2), as shown in Fig.29A.

The operation of the second wing door opening/closing device D is now explained. During opening the wing door 1, since the stroke of the torsion coil spring 90 is at a small state, the second wing door opening/closing device D applies a swinging-up force to the wing door 1 during the initial stage of the opening of the wing door 1. If, at a preset rotational angle of the wing door 1, the torsion coil spring 90 reaches the state shown in Fig.29B (i.e., a larger stroke), the second wing door opening/closing device D ceases to exert the swinging-up force to the wing door 1. Subsequently, the wing door 1 continues to be swung by the first wing door opening/closing device A. Thus, with the present embodiment of the wing door opening/closing apparatus, a larger swinging up force may be developed during the early stage of the opening of the wing door 1. Meanwhile, the torsion spring 90 of the present embodiment may be replaced by springs of other types, such as rod-shaped torsion bar.

### [Ninth Embodiment]

The wing door opening/closing apparatus according to a ninth embodiment of the present invention is now explained. The wing door opening/closing apparatus according to this ninth embodiment comprises a first wing door opening/closing device A basically having the structure shown in Fig.5 and a second wing door opening/closing device B basically having the structure shown in Fig.19, with the wing door opening/closing devices A and B being vertically juxtaposed to each other, as shown in Figs.30 to 32. In the present embodiment, the above-described first and fifth embodiments should be referenced as to the basic structures of the first wing door opening/closing device A and the second wing door opening/closing device B, respectively, and the following description is centered about the point of difference of the present embodiment from the fifth embodiment described above.

The above-described fifth embodiment of the wing door opening/closing apparatus is a combination of the first wing door opening/closing device A shown in Fig.5 and the second wing door opening/closing device B shown in Fig.19, in the horizontally juxtaposed or side-by-side state, as shown in Fig.16.

In the present embodiment of the wing door opening/closing apparatus, the first wing door opening/closing device A and the second wing door opening/closing device B are juxtaposed or arranged side-by-side along the vertical direction, as shown in Figs.30 to 32.

Referring more specifically to Figs.30 to 32, the hinge pins 5 and 6 of the wing door 1 are provided at the positions higher than those shown in Figs.5 and 6. On top of the first wing door opening/closing device A, there is arranged a mounting plate 91 secured to the vehicle body 2. At a preset location in the mounting plate 91 is formed a cut-out 91a for allowing the swinging of the first-1 link member 11 provided to the first wing door opening/closing device A. The length of the first-1 link member 11 is designed to be longer than that of the first link member 11 of Fig.5 for arranging the second wing door opening/closing device B above the first wing door opening/closing device A. The length of the second-1 link member 63 provided to the second wing door opening/closing device B is also designed to be longer than that of the second-1 link member 63 shown in Fig. 19.

The wing door opening/closing apparatus of the present embodiment operates similarly to the wing door opening/closing apparatus of the above-described fifth embodiment. Moreover, in the present embodiment of the wing door opening/closing apparatus, in which the plural wing door opening/closing devices A, B are arranged side-by-side along the vertical direction, it is possible to provide a larger capacity for the cargo box.

## Claims

1. A wing door opening/closing apparatus for swinging up a wing door pivotally mounted to a cargo box provided to a vehicle body of a truck or the like in the vicinity of a roof portion of the cargo box so that said wing door overlies said roof portion and lateral sides of said cargo box, **characterized in that**
the wing door opening/closing apparatus is formed by combining a plurality of wing door opening/closing devices having respective different moment characteristics representing a relationship between a moment caused by the weight of the wing door being rotated and moments generated by the respective wing door opening/closing devices;
at least one of said wing door opening/closing devices including a spring for generating a biasing force for swinging up said wing door and a link mechanism for transmitting the biasing force of said spring to said wing door.

2. The wing door opening/closing apparatus as defined in claim 1 wherein each of said wing door opening/closing devices includes a spring for generating the biasing force for swinging up said wing door and a link mechanism for transmitting the biasing force of said spring to said wing door.

3. A wing door opening/closing apparatus for swinging up a wing door pivotally mounted to a cargo box provided to a vehicle body of a truck or the like in the vicinity of a roof portion of the cargo box so that said wing door overlies said roof portion and lateral sides of said cargo box, **characterized in that**
the wing door opening/closing apparatus is made up by a plurality of wing door opening/closing devices;
disparity of a moment produced by one of said wing door opening/closing devices with respect to a moment caused by the weight of the wing door being rotated is compensated by a moment generated by the remaining one(s) of the wing door opening/closing devices;
at least one of said wing door opening/closing devices including a spring for generating a biasing force for swinging up said wing door and a link mechanism for transmitting the biasing force of said spring to said wing door.

4. The wing door opening/closing apparatus as defined in claim 3 wherein each of said wing door opening/closing devices includes a spring for generating the biasing force for swinging up said wing door and a link mechanism for transmitting the biasing force of said spring to said wing door.

5. A wing door opening/closing apparatus for swinging up a wing door pivotally mounted to a cargo box provided to a vehicle body of a truck or the like in the vicinity of a roof portion of the cargo box so that said wing door overlies said roof portion and lateral sides of said cargo box, **characterized in that**
the wing door opening/closing apparatus is formed by combining a plurality of wing door opening/closing devices having respective different moment characteristics representing a relation between the angle of rotation of the wing door and a moment generated by the wing door opening/closing devices;
at least one of said wing door opening/closing devices including a spring for generating the biasing force for swinging up said wing door and a link mechanism for transmitting a biasing force of said spring to said wing door.

6. The wing door opening/closing apparatus as defined in claim 5 wherein each of said wing door opening/closing devices includes a spring for generating the biasing force for swinging up said wing door and a link mechanism for transmitting the biasing force of said spring to said wing door.

7. The wing door opening/closing apparatus as defined in claim 5 wherein said plural wing door opening/closing devices having said respective different moment characteristics comprise:
a first wing door opening/closing device generating a maximum moment at an angle of rotation of said wing door larger than an angle of rotation thereof for which the weight moment of said wing door is maximum; and
a second wing door opening/closing device generating the maximum moment at an angle of rotation of said wing door smaller than the angle of rotation thereof for which the weight moment of said wing door is maximum.

8. The wing door opening/closing apparatus as defined in claim 5 wherein
one of said plural wing door opening/closing devices having the respective different moment characteristics is housed within a cargo box frame when said wing door is closed;
the other(s) of said plural wing door opening/closing devices being mounted outside said cargo box frame along a fore-and-aft direction of the vehicle body in a side-by-side relation to said one wing door opening/closing device housed within said cargo box frame.

9. The wing door opening/closing apparatus as defined in claim 5 wherein
said plural wing door opening/closing devices are arranged side-by-side along a vertical direction.

10. The wing door opening/closing apparatus as defined in claim 5 wherein
said first door opening/closing device comprises:
a first-1 link member pivotally connected to the inner side of said wing door, and
a first-2 link member pivotally mounted to said vehicle body and pivotally connected to said first-1 link member;
a first-3 link member pivotally connected to said first-2 link member;
a first-1 spring rod connected to said first-3 link member;
a first-1 guide member for translating a connecting point of said first-3 link member and said spring rod; and
a first spring interposed between the vehicle body and the spring rod; and
said second door opening/closing device comprises:
a second-1 link member pivotally connected to the inner side of said wing door;
a second spring rod linked to said second-1 link member;
a second spring interposed between said vehicle body and said second spring rod; and
a second-1 guide member for translating a linking point of said second-1 link member and said second spring rod.

11. The wing door opening/closing apparatus as defined in claim 5 wherein
of said plural wing door opening/closing devices, both said first and second wing door opening/closing devices each comprise:
a first link member connected to the inner side of said wing door;
a spring rod pivotally connected to said second-1 link member:
a spring interposed between said vehicle body and said spring rod; and
a guide member for translating a connecting point between said first link member and said spring rod;
an angle between a spring axis direction of said spring and said first link member in said first wing door opening/closing device being smaller than that in said second wing door opening/closing device in a closed position of said wing door.

12. The wing door opening/closing apparatus as defined in claim 5 wherein
of said plural wing door opening/closing devices, both said first and second wing door opening/closing devices each comprises:
a first link member pivotally connected to the inner side of said wing door and pivotally mounted to said vehicle body; and
a spring interposed between said vehicle body and said first link member so as to be pivoted relative to said vehicle body;
wherein
an arm of moment drawn from a pivoted point of said wing to a line interconnecting a point of connection between said spring axis and said first link member and a point of connection between the first link member and the wing door is longer in said first wing door opening/closing device than in second wing door opening/closing device in a closed position of said wing door.

13. The wing door opening/closing apparatus as defined in claim 5 wherein
of said plural wing door opening/closing devices, said first wing door opening/closing devices comprises:
a first-1 link member pivotally connected to the inner side of said wing door;
a first-2 link member pivotally mounted to said vehicle body and pivotally connected to said first-1 link member;
a first-3 link member pivotally. connected to said first-2 link member;
a first-1 spring rod connected to said first-3 link member;
a first-1 guide member connected to said first-3 link member; and
a first spring interposed between said vehicle body and the spring rod; and
said second wing door opening/closing device comprises:
a second-1 link member pivotally and slidably connected to the inner side of said wing door and pivotally mounted to said vehicle body;
a second spring rod connected to said second-1 link member; and
a second spring pivotally mounted to said vehicle body and pivotally connected to said second-1 link member with or without interposition of said second spring rod.

14. The wing door opening/closing apparatus as defined in claim 5 wherein
of said plural wing door opening/closing devices, said first wing door opening/closing devices comprises:
a first-1 link member pivotally connected to the inner side of said wing door;
a first-2 link member pivotally mounted to said vehicle body and pivotally connected to said first-1 link member;
a first-3 link member pivotally connected to said first-2 link member;
a first-1 spring rod connected to said first-3 link member;
a first-1 guide member for translating a connecting point between the first-3 link member and said spring rod; and
a first spring interposed between said vehicle body and the spring rod; and
said second wing door opening/closing device comprises:
a second·1 link member pivotally connected to the inner side of said wing door;
a second spring member connected to said second-1 link member;
a second spring interposed between said vehicle body and said second spring member for pivoting relative to said vehicle body; and
a second-2 link member pivotally mounted to said vehicle body and connected to a connecting point between said second-1 link member and said second spring rod.

15. The wing door opening/closing apparatus as defined in claim 5 wherein
said plural wing door opening/closing devices comprise first and second wing door opening/closing devices having respective different operating ranges.

16. The wing door opening/closing apparatus as defined in claim 5 further comprising:
a stopper for halting the operation of at least one of said plural wing door opening/closing devices.

17. The wing door opening/closing apparatus as defined in claim 16 wherein the wing door opening/closing device comprises:
a spring for generating a driving force for opening/closing said wing door; and
a link mechanism pivotally mounted to said vehicle body, said link mechanism having one side slidably pivotally connected to the inner side of said wing door and having the other side connected to said spring for transmitting a driving force of said spring to said wing door;
a portion of said link mechanism slidingly contacting with said wing door being spaced apart from a slide contact surface of said wing door when said stopper halts operation of said wing door opening/closing device on which acts said stopper.

18. The wing door opening/closing apparatus as defined in claim 5 wherein, of said plural wing door opening/closing devices, at least one wing door opening/closing device comprises a torsion spring interposed between the inner side of said wing door and the vehicle body.
